(19) Europäisches Patentamt
European Patent Office
Office européen des brevets

(11) EP 2 864 110 B1

(12) EUROPEAN PATENT SPECIFICATION

(45) Date of publication and mention of the grant of the patent:
**21.12.2016 Bulletin 2016/51**

(21) Application number: **13732331.7**

(22) Date of filing: **14.06.2013**

(51) Int Cl.:
***B29D 11/00*** (2006.01) ***G02B 1/04*** (2006.01)

(86) International application number:
**PCT/US2013/045779**

(87) International publication number:
**WO 2014/004107 (03.01.2014 Gazette 2014/01)**

# (54) LENS COMPRISING LOW AND HIGH MOLECULAR WEIGHT POLYAMIDES

LINSE MIT POLYAMIDEN MIT HOHEM UND NIEDRIGEM MOLEKULARGEWICHT

LENTILLE COMPRENANT DES POLYAMIDES DE POIDS MOLÉCULAIRE FAIBLE ET ÉLEVÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2012 US 201261663720 P**

(43) Date of publication of application:
**29.04.2015 Bulletin 2015/18**

(73) Proprietor: **Johnson & Johnson Vision Care Inc.**
**Jacksonville, FL 32256 (US)**

(72) Inventors:
- **ALLI, Azaam**
**Jacksonville, Florida 32277 (US)**
- **MAHADEVAN, Shivkumar**
**Orange Park, Florida 32003 (US)**

(74) Representative: **Carpmaels & Ransford LLP**
**One Southampton Row**
**London WC1B 5HA (GB)**

(56) References cited:
**EP-A2- 1 818 692**
**US-A1- 2009 182 067**
**US-A1- 2009 295 004**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 864 110 B1

## Description

### Related Applications

This application claims priority to U.S. Provisional Patent Application No. 61/663,720, filed on June 25, 2012 entitled LENS COMPRISING LOW AND HIGH MOLECULAR WEIGHT POYAMIDES.

### Field of the Invention

The present invention relates to a contact lens having increased comfort and wettability during the subsequent uses.

### Background of the Invention

Contact lenses have been used commercially to improve vision since the 1950s. The first contact lenses were made of hard materials. Although these lenses are still currently used, they are not suitable for all patients due to their poor initial comfort and their relatively low permeability to oxygen. Later developments in the field gave rise to soft contact lenses, based upon hydrogels, which are extremely popular today. Many users find soft lenses are more comfortable, and increased comfort levels can allow soft contact lens users to wear their lenses longer than users of hard contact lenses US 2009/182067 A1 discloses a process for making a contact lens comprising the steps of: (i) dispensing to a mold a reactive mixture comprising (i) at least one acrylate component, (ii) PVP K-30 (iii) PVP K-90 and (iv) less than about 5 or less wt% water, (ii) curing said reactive mixture within said mold to form said contact lens; and (iii) de-molding and de-lensing manually.

As many soft contact lenses are used multiple times, there is a need to incease the comfort and wettability of the lens during the subsequent uses. The present invention relates to the discovery of incorporating at least one low molecular weight polyamide into the contact lens. Some of this polyamide would be released from within the lens to the lens' surface during wearing as well as into the lens' packing solution during multiple uses, thereby increasing the comfort and wettabiity of the lens during such subsequent uses.

### Summary of the Invention

In one aspect, the present invention relates a method of manufacturing a contact lens, said method comprising the steps of:

(i) dispensing to a mold a reactive mixture comprising (i) at least one silicone component, (ii) at least one low molecular weight polyamide having a weight average molecular weight of less than 200,000, (iii) at least one high molecular weight polyamide having a weight average molecular weight of greater than 200,000, and (iv) less than about 15 wt% diluent, wherein said low molecular weight polyamide does not contain a reactive group;
(ii) curing said reactive mixture within said mold to form said contact lens; and
(iii) removing said contact lens from said mold, without liquid.
(iv) extracting the contact lens using aqueous solution.

Other features and advantages of the present invention will be apparent from the detailed description of the invention and from the claims.

### Detailed Description of the Invention

It is believed that one skilled in the art can, based upon the description herein, utilize the present invention to its fullest extent. The following specific embodiments can be construed as merely illustrative, and not limitative of the remainder of the disclosure in any way whatsoever.

Unless defined otherwise, all technical and scientific terms used herein have the same meaning as commonly understood by one of ordinary skill in the art to which the invention belongs.

#### Definitions

As used herein, the term "lens" refers to ophthalmic devices that reside in or on the eye. The term "lens" includes, but is not limited to soft contact lenses, hard contact lenses, intraocular lenses, and overlay lenses.

As used herein "reactive mixture" refers to the mixture of components (both reactive and non-reactive) which

are mixed together and subjected to polymerization conditions to form the hydrogels and lenses of the present invention. The reactive mixture comprises reactive components such as monomers, macromers, prepolymers, cross-linkers, and initiators, and additives such as wetting agents, release agents, dyes, pigments, light absorbing compounds such as UV absorbers, and photochromic compounds, any of which may be reactive or non-reactive but are capable of being retained within the resulting lens, as well as pharmaceutical and neutriceutical compounds, and any diluents. It will be appreciated that a wide range of additives may be added based upon the lens which is made, and its intended use.

Concentrations of components of the reactive mixture are given in weight % of all components in the reaction mixture, excluding any diluents. When diluents are used their concentrations are given as weight % based upon the amount of all components in the reaction mixture and the diluents.

As used herein "reactive groups" are groups that can undergo free radical and/or ionic polymerization.

As used herein, "polymerizable" means that the compound comprises at least one polymerizable functional group, such as acrylate, methacrylate, acrylamide, methacrylamide, N-vinyl lactam, N-vinylamide, and styryl functional groups. "Nonpolymerizable" means that the compound does not comprise such a polymerizable functional group.

As used herein, "hydrophobic" means that the compound(s)/monomer(s) is insoluble in a mixture of 10 weight parts in 90 weight parts of water, and "hydrophilic" means that the compound(s)/monomer(s) is soluble in a mixture of 10 parts in 90 weight parts of water. The solubility of a substance is evaluated at 20 °C.

As used herein, the term "alkyl" refers to a hydrocarbon group of from 1 to 20 carbons, unless otherwise indicated.

<u>Silicone Component</u>

A silicone-containing component (or silicone component) is one that contains at least one [-Si-O-Si] group, in a monomer, macromer or prepolymer. In one embodiment, the Si and attached O are present in the silicone-containing component in an amount greater than 20 weight percent, such as greater than 30 weight percent of the total molecular weight of the silicone-containing component. Useful silicone-containing components include polymerizable functional groups such as acrylate, methacrylate, acrylamide, methacrylamide, N-vinyl lactam, N-vinylamide, and styryl functional groups. Examples of silicone-containing components which are useful in this invention may be found in U.S. Patent Nos. 3,808,178; 4,120,570; 4,136,250; 4,153,641; 4,740,533; 5,034,461; 5,962,548; 5,998,498; and 5,070,215, and European Patent No. 080539.

Suitable silicone-containing components include compounds of Formula I

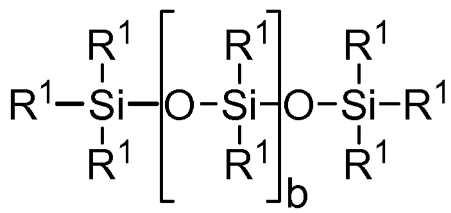

Formula I

wherein:

> $R^1$ is independently selected from reactive groups, monovalent alkyl groups, or monovalent aryl groups, any of the foregoing which may further comprise functionality selected from hydroxy, amino, oxa, carboxy, alkyl carboxy, alkoxy, amido, carbamate, carbonate, halogen or combinations thereof; and monovalent siloxane chains comprising 1-100 Si-O repeat units which may further comprise functionality selected from alkyl, hydroxy, amino, oxa, carboxy, alkyl carboxy, alkoxy, amido, carbamate, halogen or combinations thereof;
> where b = 0 to 500 (such as 0 to 100, such as 0 to 20), where it is understood that when b is other than 0, b is a distribution having a mode equal to a stated value; and
> wherein at least one $R^1$ comprises a reactive group, and in some embodiments from one to three $R^1$ comprise reactive groups.

Non-limiting examples of free radical reactive groups include (meth)acrylates, styryls, vinyls, vinyl ethers, $C_{1-6}$alkyl(meth)acrylates, (meth)acrylamides, $C_{1-6}$alkyl(meth)acrylamides, N-vinyllactams, N-vinylamides, $C_{2-12}$alkenyls, $C_{2-12}$alkenylphenyls, $C_{2-12}$alkenylnaphthyls, $C_{2-6}$alkenylphenyl$C_{1-6}$alkyls, O-vinylcarbamates and O-vinylcarbonates. Non-limiting examples of cationic reactive groups include vinyl ethers or epoxide groups and mixtures thereof. In one embodiment the free radical reactive groups comprises (meth)acrylate, acryloxy, (meth)acrylamide, and mixtures thereof.

Suitable monovalent alkyl and aryl groups include unsubstituted monovalent $C_1$ to $C_{16}$alkyl groups, $C_6$-$C_{14}$ aryl groups, such as substituted and unsubstituted methyl, ethyl, propyl, butyl, 2-hydroxypropyl, propoxypropyl, polyethyleneoxypropyl, combinations thereof and the like.

In one embodiment b is zero, one $R^1$ is a reactive group, and at least 3 $R^1$ are selected from monovalent alkyl groups having one to 16 carbon atoms, and in another embodiment from monovalent alkyl groups having one to 6 carbon atoms, in another embodiment one $R^1$ is a reactive group, two $R^1$ are trialkyl siloxanyl group and the remaining $R^1$ are methyl, ethyl or phenyl and in a further embodiment one $R^1$ is a reactive group, two $R^1$ are trialkyl siloxanyl groups and the remaining $R^1$ are methyl. Non-limiting examples of silicone components of this embodiment include propenoic acid,-2-methyl-,2-hydroxy-3-[3-[1,3,3,3-tetramethyl-1-[(trimethylsilyl)oxy]-1-disiloxanyl]propoxy]propyl ester ("SiGMA"; structure in Formula II),

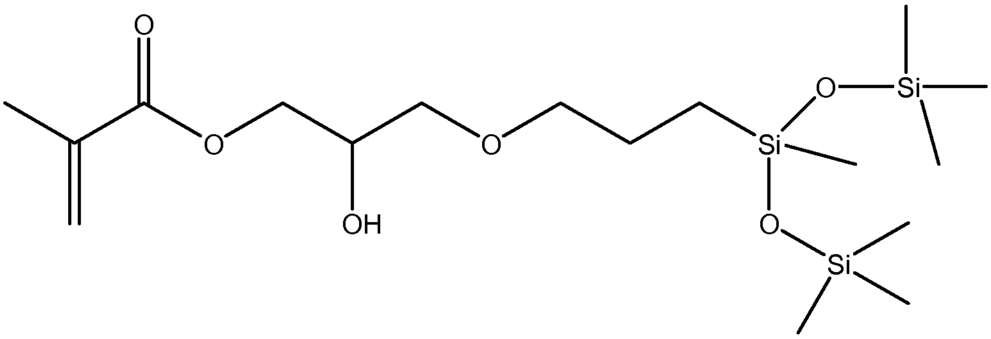

Formula II

2-hydroxy-3-methacryloxypropyloxypropyl-tris(trimethylsiloxy)silane, 3-methacryloxypropyltris(trimethylsiloxy)silane ("TRIS"), 3-methacryloxypropylbis(trimethylsiloxy)methylsilane, and 3-methacryloxypropylpentamethyl disiloxane.

In another embodiment, b is 2 to 20, 3 to 20, 3 to 16, 3 to 15 or in some embodiments 3 to 10; at least one terminal $R^1$ comprises a reactive group and the remaining $R^1$ are selected from monovalent alkyl groups having 1 to 16 carbon atoms, and in another embodiment from monovalent alkyl groups having 1 to 6 carbon atoms. In yet another embodiment, b is 3 to 15, one terminal $R^1$ comprises a reactive group, the other terminal $R^1$ comprises a monovalent alkyl group having 1 to 6 carbon atoms and the remaining $R^1$ comprise monovalent alkyl group having 1 to 3 carbon atoms. Non-limiting examples of silicone components of this embodiment include (mono-(2-hydroxy-3-methacryloxypropyl)-propyl ether terminated polydimethylsiloxane (400 - 2000, or 400-1600 MW)) ("OH-mPDMS"; structure in Formula III),

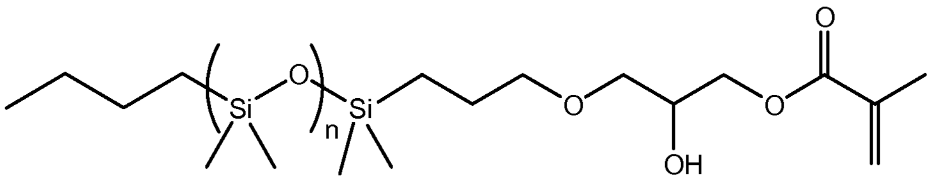

Formula III

monomethacryloxypropyl terminated mono-n-butyl terminated polydimethylsiloxanes (800-1000 MW), ("mPDMS"; structure in Formula IV).

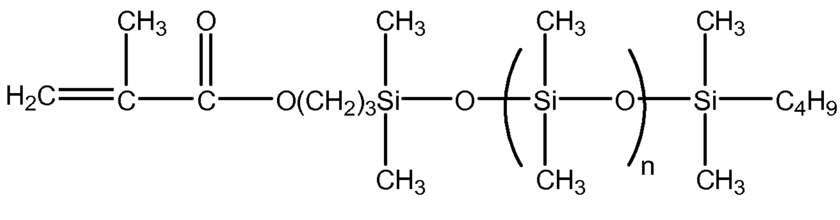

Formula IV

In another embodiment, the silicone component comprises a polydimethylsiloxane bis-methacrylate with pendent hydroxyl groups, such as compound C2, C4 or R2 described in US Patent Application No. 2004/0192872 or such as is described in Examples XXV, XXVIII, or XXXii in US Patent No. 4,259,467, polymerizable polysiloxanes with pendant hydrophilic groups such as those disclosed in US6867245. In some embodiments the pendant hydrophilic groups are hydroxyalkyl groups and polyalkylene ether groups or combinations thereof. The polymerizable polysiloxanes may also comprise fluorocarbon groups. An example is shown as structure B3.

In another embodiment b is 5 to 400 or from 10 to 300, both terminal $R^1$ comprise reactive groups and the remaining $R^1$ are independently selected from monovalent alkyl groups having 1 to 18 carbon atoms which may have ether linkages between carbon atoms and may further comprise halogen.

In another embodiment, one to four $R^1$ comprises a vinyl carbonate or carbamate of Formula V:

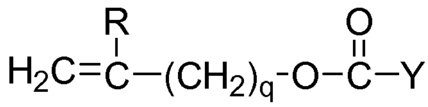

Formula V

wherein: Y denotes O-, S- or NH-; R denotes, hydrogen or methyl; and q is 0 or 1.

The silicone-containing vinyl carbonate or vinyl carbamate monomers specifically include: 1,3-bis[4-(vinyloxycarbonyloxy)but-1-yl]tetramethyl-disiloxane; 3-(vinyloxycarbonylthio) propyl-[tris (trimethylsiloxy)silane]; 3-[tris(trimethylsiloxy)silyl] propyl allyl carbamate; 3-[tris(trimethylsiloxy)silyl] propyl vinyl carbamate; trimethylsilylethyl vinyl carbonate; trimethylsilylmethyl vinyl carbonate, and the compound of Formula VI.

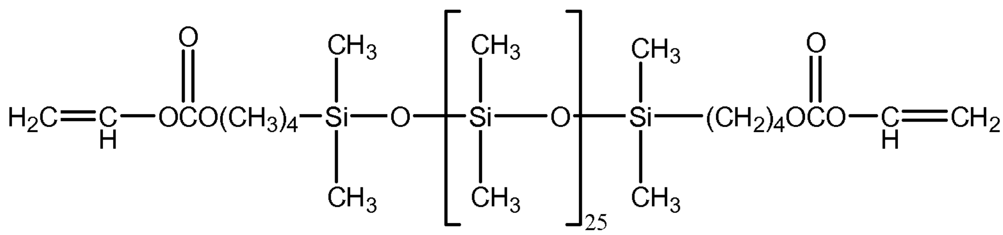

Formula VI

Where biomedical devices with moduli below about 200 are desired, only one $R^1$ shall comprise a reactive group and no more than two of the remaining $R^1$ groups will comprise monovalent siloxane groups.

Another suitable silicone containing macromer is compound of Formula VII (in which x + y is a number in the range of 10 to 30) formed by the reaction of fluoroether, hydroxy-terminated polydimethylsiloxane, isophorone diisocyanate and isocyanatoethylmethacrylate.

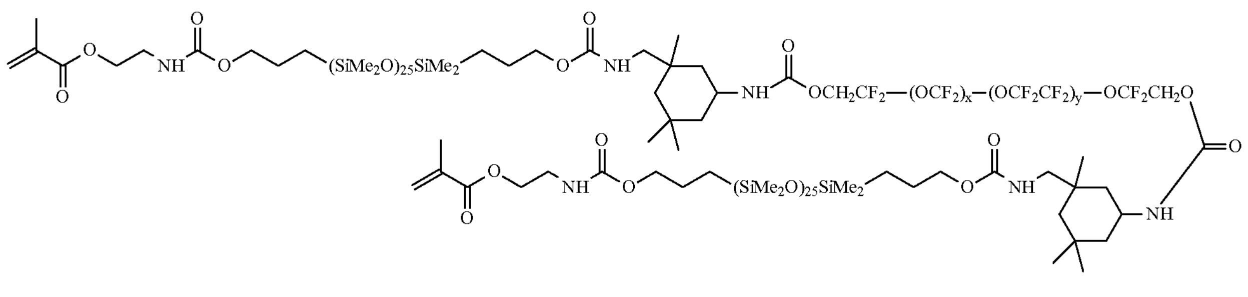

Formula VII

Other components suitable for use in this invention include those described is WO 96/31792 such as macromers containing polysiloxane, polyalkylene ether, diisocyanate, polyfluorinated hydrocarbon, polyfluorinated ether and polysaccharide groups. Another class of suitable silicone-containing components includes silicone containing macromers made via GTP, such as those disclosed in U.S. Pat Nos. 5,314,960, 5,331,067, 5,244,981, 5,371,147 and 6,367,929. U.S. Pat. Nos. 5,321,108; 5,387,662 and 5,539,016 describe polysiloxanes with a polar fluorinated graft or side group

having a hydrogen atom attached to a terminal difluoro-substituted carbon atom. US 2002/0016383 describe hydrophilic siloxanyl methacrylates containing ether and siloxanyl linkanges and crosslinkable monomers containing polyether and polysiloxanyl groups. Any of the foregoing polysiloxanes can also be used as the silicone-containing component in this invention.

In one embodiment of the present invention where a modulus of less than about 120 psi is desired, the majority of the mass fraction of the silicone-containing components used in the lens formulation should contain only one polymerizable functional group ("monofunctional silicone containing component"). In this embodiment, to insure the desired balance of oxygen transmissibility and modulus it is preferred that all components having more than one polymerizable functional group ("multifunctional components") make up no more than 10 mmol/100 g of the reactive components, and preferably no more than 7 mmol/100 g of the reactive components.

In one embodiment, the silicone component is selected from the group consisting of monomethacryloxypropyl terminated, mono-n-alkyl terminated polydialkylsiloxane; bis-3-acryloxy-2-hydroxypropyloxypropyl polydialkylsiloxane; methacryloxypropyl-terminated polydialkylsiloxanes; mono-(3-methacryloxy-2-hydroxypropyloxy)propyl terminated, mono-alkyl terminated polydialkylsiloxane; and mixtures thereof.

In one embodiment, the silicone component is selected from monomethacrylate terminated polydimethylsiloxanes; bis-3-acryloxy-2-hydroxypropyloxypropyl polydialkylsiloxane; and mono-(3-methacryloxy-2-hydroxypropyloxy)propyl terminated, mono-butyl terminated polydialkylsiloxane; and mixtures thereof.

In one embodiment, the silicone component has an average molecular weight of from about 400 to about 4000 daltons.

The silicone containing component(s) may be present in amounts from about 10 to about 95 weight %, and in some embodiments from about 10 and about 80 and in other embodiments from about 20 and about 70 weight %, based upon all reactive components of the reactive mixture (e.g., excluding diluents).

Non-reactive Polyamides

The reactive mixture/lens contains at least one low molecular weight polyamide and at least one high molecular weight polyamide, wherein the low molecular weight hydrophilic polyamide does not contain a reactive group. In one embodiment, the at least one low molecular weight polyamide and the at least one high molecular weight polyamide are hydrophilic. In one embodiment, the high molecular weight hydrophilic polyamide does not contain a reactive group. Examples of such polyamides include, but are not limited to: polylactams such as polyvinylpyrrolidone (PVP); polyacrylamides such as polydimethylacrylamide (PDMA), polydiethylacrylamide (PDEA), and poly[N-isopropylacrylamide]; and polyvinylmethylacetamide (PVMA); polyvinylacetamide, polyacrylamide; and copolymers thereof. Suitable comonomers include acrylic acid, methacrylic acid, 2-hydroxyethyl methacrylate, reactive polyethylene glycol monomers, combinations thereof and the like.

What is meant by a low molecular weight polyamide is a polyamide that has a weight average molecular weight ($M_W$) of less than 200,000 (such as less than 100,000, such as less than 70,000). Examples of low molecular weight polyamides include, but are not limited to, PVP K30, PVP K15, and PVP K12. What is meant by a high molecular weight polyamide is a polyamide that has a weight average molecular weight of greater than 200,000 (such as greater than 400,000, such as greater than 700,000). Examples of high molecular weight polyamides include, but are not limited to, PVP K70, K80, K85, K90, and K120. Such low molecular weight PVPs and high molecular weight PVPs are commercially available from International Specialty Products (Wayne, NJ) and BASF Corporation (Mount Olive, NJ). For PVPs, the weight average molecular weight can be determined from the K value of the PVP (i.e., using tables as set forth in Y. Kirsh, Water Soluble Poly-N-Vinylamides, p. 76; John Wiley & Sons, 1998).

The at least one low molecular weight polyamide may be present in a wide range of amounts, depending upon the specific balance of properties desired. In one embodiment, the amount of the at least one low molecular weight polyamide is at least present in an amount between about 1% and about 15% by weight, and in another embodiment between about 3 to about 10 % by weight, based upon the reactive components (excluding diluents).

The at least one high molecular weight polyamide may be present in a wide range of amounts, depending upon the specific balance of properties desired. In one embodiment, the amount of the at least one high molecular weight polyamide is between about 3% and about 20 % by weight, and in another embodiment between about 3 to about 15 % by weight based upon the reactive components (excluding diluents).

In one embodiment, the ratio of the at least one low molecular weight polyamide and the at least one high molecular weight polyamide is from about 1:5 to about 5:1, an in another embodiment from about 1:2 to about 1:1.

Hydrophilic Component

In one embodiment, the reactive mixture/lens may also contain at least one reactive hydrophilic component. In one embodiment, the hydrophilic components can be any of the hydrophilic monomers known to be useful to make

hydrogels.

One class of suitable hydrophilic monomers includes acrylic- or vinyl-containing monomers. Such hydrophilic monomers may themselves be used as crosslinking agents, however, where hydrophilic monomers having more than one polymerizable functional group are used, their concentration should be limited as discussed above to provide a contact lens having the desired modulus.

The term "vinyl-type" or "vinyl-containing" monomers refer to monomers containing the vinyl grouping (Y-$CH=CH_2$, where Y is not carbonyl (C=O)) and that are capable of polymerizing.

Hydrophilic vinyl-containing monomers which may be incorporated into the reactive mixtures/hydrogels/lenses of the present invention include, but are not limited to, monomers such as N-vinyl amides, N-vinyl lactams (e.g. N-vinylpyrrolidone or NVP), N-vinyl-N-methyl acetamide, N-vinyl-N-ethyl acetamide, N-vinyl-N-ethyl formamide, N-vinyl formamide, with NVP being preferred.

"Acrylic-type" or "acrylic-containing" monomers are those monomers containing the acrylic group: ($CH_2$=CR-COX) wherein R is H or $CH_3$, and X is O or N, which are also known to polymerize readily, such as N,N-dimethyl acrylamide (DMA), 2-hydroxyethyl methacrylate (HEMA), glycerol methacrylate, 2-hydroxyethyl methacrylamide, polyethyleneglycol monomethacrylate, methacrylic acid, mixtures thereof and the like.

Other hydrophilic monomers that can be employed in the invention include, but are not limited to, polyoxyethylene polyols having one or more of the terminal hydroxyl groups replaced with a functional group containing a polymerizable double bond. Examples include polyethylene glycol, ethoxylated alkyl glucoside, and ethoxylated bisphenol A reacted with one or more molar equivalents of an end-capping group such as isocyanatoethyl methacrylate ("IEM"), methacrylic anhydride, methacryloyl chloride, vinylbenzoyl chloride, or the like, to produce a polyethylene polyol having one or more terminal polymerizable olefinic groups bonded to the polyethylene polyol through linking moieties such as carbamate or ester groups. Examples include, but are not limited to, polyethyleneglycol (475 $M_W$) monomethylether monomethacrylate (mPEG 475).

Still further examples are the hydrophilic vinyl carbonate or vinyl carbamate monomers disclosed in U.S. Patents No. 5,070,215 and the hydrophilic oxazoline monomers disclosed in U.S. Patents No. 4,910,277. Other suitable hydrophilic monomers will be apparent to one skilled in the art.

In one embodiment the hydrophilic component comprises at least one hydrophilic monomer such as DMA, HEMA, glycerol methacrylate, 2-hydroxyethyl methacrylamide, NVP, N-vinyl-N-methyl acrylamide, polyethyleneglycol monomethacrylate, and combinations thereof. In another embodiment, the hydrophilic monomers comprise at least one of DMA, HEMA, NVP and N-vinyl-N-methyl acrylamide and mixtures thereof. In another embodiment, the hydrophilic monomer comprises DMA and/or HEMA.

The hydrophilic component(s) (e.g., polyethylene glycol or other hydrophilic monomer(s) such as DMA or HEMA) may be present in a wide range of amounts, depending upon the specific balance of properties desired. In one embodiment, the amount of the hydrophilic component is up to about 60 weight %, such as from about 5 and about 40 weight %.

<u>Polymerization Initiator</u>

One or more polymerization initiators may be included in the reaction mixture. Examples of polymerization initiators include, but are not limited to, compounds such as lauryl peroxide, benzoyl peroxide, isopropyl percarbonate, azobisisobutyronitrile, and the like, that generate free radicals at moderately elevated temperatures, and photoinitiator systems such as aromatic alpha-hydroxy ketones, alkoxyoxybenzoins, acetophenones, acylphosphine oxides, bisacylphosphine oxides, and a tertiary amine plus a diketone, mixtures thereof and the like. Illustrative examples of photoinitiators are 1-hydroxycyclohexyl phenyl ketone, 2-hydroxy-2-methyl-1-phenyl-propan-1-one, bis(2,6-dimethoxybenzoyl)-2,4-4-trimethylpentyl phosphine oxide (DMBAPO), bis(2,4,6-trimethylbenzoyl)-phenyl phosphineoxide (IRGACURE 819), 2,4,6-trimethylbenzyldiphenyl phosphine oxide and 2,4,6-trimethylbenzoyl diphenylphosphine oxide, benzoin methyl ester and a combination of camphorquinone and ethyl 4-(N,N-dimethylamino)benzoate. Commercially available visible light initiator systems include, but are not limited to, IRGACURE 819, IRGACURE 1700, IRGACURE 1800, IRGACURE 1850 (all from Ciba Specialty Chemicals) and Lucirin TPO initiator (available from BASF). Commercially available UV photoinitiators include Darocur 1173 and Darocur 2959 (Ciba Specialty Chemicals). These and other photoinitators which may be used are disclosed in Volume III, Photoinitiators for Free Radical Cationic & Anionic Photopolymerization, 2nd Edition by J.V. Crivello& K. Dietliker; edited by G. Bradley; John Wiley and Sons; New York; 1998.

The polymerization initiator is used in the reaction mixture in effective amounts to initiate photopolymerization of the reaction mixture, such as from about 0.1 to about 2 weight %. Polymerization of the reaction mixture can be initiated using the appropriate choice of heat or visible or ultraviolet light or other means depending on the polymerization initiator used. Alternatively, initiation can be conducted without a photoinitiator using, for example, e-beam. However, when a photoinitiator is used, the preferred initiators are bisacylphosphine oxides, such as bis(2,4,6-trimethylbenzoyl)-phenyl phosphine oxide (IRGACURE 819) or a combination of 1-hydroxycyclohexyl phenyl ketone and bis(2,6-dimethoxybenzoyl)-2,4-4-trimethylpentyl phosphine oxide (DMBAPO), and in another embodiment the method of polymerization initiation is via visible light activation. A preferred initiator is bis(2,4,6-trimethylbenzoyl)-phenyl phosphine oxide (IRGACURE 819).

Other Components

Other components that can be present in the reaction mixture used to form the lenses of this invention include, but are not limited to, compatibilizing components (such as those disclosed in US Patent Application Nos. 2003/162862 and US2003/125498), ultra-violet absorbing compounds, medicinal agents, antimicrobial compounds, copolymerizable and nonpolymerizable dyes, copolymerizable and non-copolymerizable photochromic compounds, ionic monomers or components, surfactants, release agents, reactive tints, pigments, combinations thereof and the like. In one embodiment, the sum of additional components may be up to about 20 wt%.

Diluents

In one embodiment, the reactive components (e.g., silicone-containing components, hydrophilic monomers, wetting agents, and/or other components) are mixed together either with or without a diluent to form the reaction mixture. In one embodiment, the reactive mixture comprises less than fifteen percent, by weight, of one or more diluents, less than five percent, by weight, of one or more diluents, less than one percent, by weight, of one or more diluents, or comprises no diluents.

In one embodiment where a diluent is used, the diluent has a polarity sufficiently low to solubilize the non-polar components in the reactive mixture at reaction conditions. One way to characterize the polarity of the diluents of the present invention is via the Hansen solubility parameter, $\delta p$. In certain embodiments, the $\delta p$ is less than about 10, and preferably less than about 6. Suitable diluents are further disclosed in US Patent Application No. 20100280146 and US Patent No. 6,020,445.

In another embodiment the selected diluents are ophthalmically compatible, at least in small concentrations. Thus, in one embodiment the diluent is ophthalmically compatible in concentrations of up to 5 weight % in the packing solution and in some embodiments , up to 1% by weight of the packing solution.

Classes of suitable diluents include, without limitation, alcohols having 2 to 20 carbons, amides having 10 to 20 carbon atoms derived from primary amines, ethers, polyethers, ketones having 3 to 10 carbon atoms, and carboxylic acids having 8 to 20 carbon atoms. As the number of carbons increase, the number of polar moieties may also be increased to provide the desired level of water miscibility. In some embodiments, primary and tertiary alcohols are preferred. Preferred classes include alcohols having 4 to 20 carbons and carboxylic acids having 10 to 20 carbon atoms.

In one embodiment, the diluents are selected from 1,2-octanediol, t-amyl alcohol, 3-methyl-3-pentanol, decanoic acid, 3,7-dimethyl-3-octanol, tripropylene glycol methyl ether (TPME), 1, 2-propanediol, glycerol, polyethylene glycol having molecular weights between about 200 and about 30,000, methyl glucose ethers, such as Glucam polymers, butoxy ethyl acetate, mixtures thereof and the like.

In one embodiment, the diluents are selected from diluents that have some degree of solubility in water. In some embodiments at least about three percent of the diluent is miscible water. Examples of water soluble diluents include, but are not limited to, 1-octanol, 1-pentanol, 1-hexanol, 2-hexanol, 2-octanol, 3-methyl-3-pentanol, 2-pentanol, t-amyl alcohol, *tert*-butanol, 2-butanol, 1-butanol, 2-methyl-2-pentanol, 2-ethyl-1-butanol, ethanol, 3,3-dimethyl-2-butanol, decanoic acid, octanoic acid, dodecanoic acid, 1-ethoxy-2- propanol, 1-tert-butoxy-2-propanol, EH-5 (commercially available from Ethox Chemicals), 2,3,6,7-tetrahydroxy-2,3,6,7-tetramethyl octane, 9-(1-methylethyl)-2,5,8,10,13,16-hexaoxaheptadecane, 3,5,7,9,11,13-hexamethoxy-1-tetradecanol, mixtures thereof and the like.

Suitable ranges for the components of the present invention are shown in the Table below.

| Component | Concentration (wt%) |
|---|---|
| Silicone component | 10-95, 10-80, 20-70 |
| Hydrophilic component | 0-60, 5-40 |
| High MW polyamide | 3-20; 3-15 |
| Low MW polyamide | 1-15; 3-10 |
| Other | 0-20 |
| Diluent | $\leq 15$, $\leq 10$, $\leq 5$, $\leq 1$, 0 |

It will be appreciated that the amount of the components in each embodiment will add up to 100. Also, the ranges may be combined in any combination.

Curing of Polymer/Hydrogel and Manufacture of Lens

The reactive mixture of the present invention may be cured via any known process for molding the reaction mixture in the production of lenses, including spincasting and static casting. Spincasting methods are disclosed in U.S. Patents Nos. 3,408,429 and 3,660,545, and static casting methods are disclosed in U.S. Patents Nos. 4,113,224 and 4,197,266. In one embodiment, the lenses of this invention are formed by the direct molding of the hydrogels, which is economical, and enables precise control over the final shape of the hydrated lens. For this method, the reaction mixture is placed in a mold having the shape of the final desired hydrogel and the reaction mixture is subjected to conditions whereby the monomers polymerize, to thereby produce a polymer in the approximate shape of the final desired product.
In one embodiment, the lenses are released, or deblocked from the mold dry, to maintain the low molecular weight polyamide in the lens. Dry release or deblocking is achieved without contacting the lenses with a fluid or liquid. Suitable methods of dry release include the rapidly cooling the lens and lens mold or application of mechanical force, such as tapping, twisting, or pressing the lens mold.
In one embodiment, after curing and deblocking, the lens is subjected to extraction to remove unreacted components and release the lens from the lens mold. The extraction may be done using conventional extraction fluids, such organic solvents, such as alcohols or may be extracted using aqueous solutions. If extraction is used, the volume of extraction fluid and extraction time is controlled to maintain the low molecular weight polyamide in the lens. For example, the volume of extraction fluid may be limited to less than about 5 ml/lens, and in some embodiments less than about 1 ml/lens. In addition, the extraction solvents may contain up to 5 wt.% of the low molecular weight polyamide to mitigate the extent of extraction of the low molecular weight polyamide contained in the lens.
The lenses may be sterilized by known means such as, but not limited to autoclaving.

Test Methods

Protein solution:

A tear like fluid ("TLF") was used for protein uptake measurements. The TLF was made from by solubilizing the components, in the amounts listed in the Table below in phosphate saline buffer supplemented by sodium bicarbonate at 1.37g/l.

Table: Tear Like Fluid (TLF) Composition

| Components | Composition (mg/ml) | Origin |
|---|---|---|
| Proteins and Glycoproteins | | |
| Lysozyme | 1.85 | Chicken egg white |
| Lactoferrin | 2.1 | Bovine colostrum |
| Gamma Globulins | 0.3 | Bovine plasma |
| Lipocalin | 1.3 | Milk lipocaline (β lactoglobulin) from bovine milk |
| Acid glycoprotein | 0.05 | Bovine plasma |
| Mucins | 0.15 | Bovine submaxillary glands |
| (Albumin, Fn[1], Vn[z] and others components present in tears at very low concentrations (ng) | 0.1% | Bovine serum |
| Lipids | | |
| Cholesteryl linoleate | 0.024 | |
| Linalyl acetate | 0.021 | |
| Triolein | 0.016 | |
| Oleic acid | 0.012 | |

(continued)

| Table: Tear Like Fluid (TLF) Composition | | |
|---|---|---|
| Components | Composition (mg/ml) | Origin |
| Undecylenic acid | 0.0032 | |
| Cholesterol | 0.0016 | |
| Glucose | 0.1 | |
| [1]Fn: Fibronectin<br>[2]Vn: Vitronectin | | |

Lipocalin uptake was measured as follows. The lipocalin solution contained B Lactoglobulin (Lipocalin) from bovine milk (Sigma, L3908) solubilized at a concentration of 2 mg/ml in phosphate saline buffer supplemented by Sodium bicarbonate at 1.37g/l and D-Glucose at 0.1 g/l. Three lenses for each sample were tested using each protein solution, and three were tested using PBS as a control solution. The test lenses were blotted on sterile gauze to remove packing solution and aseptically transferred, using sterile forceps, into sterile, 24 well cell culture plates (one lens per well) each well containing 2 ml of lysozyme solution. Each lens was fully immersed in the solution. 2 ml of the lysozyme solution was placed in a well without a contact lens as a control.

The plates containing the lenses and the control plates containing only protein solution and the lenses in the PBS, were sealed using parafilm to prevent evaporation and dehydration, placed onto an orbital shaker and incubated at 35°C, with agitation at 100 rpm for 72 hours. After the 72 hour incubation period the lenses were rinsed 3 to 5 times by dipping lenses into three (3) separate vials containing approximately 200 ml volume of PBS. The lenses were blotted on a paper towel to remove excess PBS solution and transferred into sterile conical tubes (1 lens per tube), each tube containing a volume of PBS determined based upon an estimate of lysozyme uptake expected based upon on each lens composition. The lysozyme concentration in each tube to be tested needs to be within the albumin standards range as described by the manufacturer (0.05 microgram to 30 micrograms). Samples known to uptake a level of lysozyme lower than 100 $\mu$g per lens were diluted 5 times. Samples known to uptake levels of lysozyme higher than 500 $\mu$g per lens (such as etafilcon A lenses) are diluted 20 times.

1 ml aliquot of PBS was used for samples 9, CE2 and the balafilcon lenses, and 20ml for etafilcon A lens. Each control lens was identically processed, except that the well plates contained PBS instead of either lysozyme or lipocalin solution.

Lysozyme and Lipocalin uptake was determined using on-lens bicinchoninic acid method using QP-BCA kit ( Sigma, QP-BCA) following the procedure described by the manufacturer (the standards prep is described in the kit) and is calculated by subtracting the optical density measured on PBS soaked lenses ( background) from the optical density determined on lenses soaked in lysozyme solution.

Optical density was measured using a SynergyII Micro-plate reader capable for reading optical density at 562nm.

Mucin uptake was measured using the following solution and method. The mucin solution contained mucins from bovine submaxillary glands (Sigma, M3895-type 1-S) solubilized at a concentration of 2 mg/ml in phosphate saline buffer (Sigma, D8662) supplemented by sodium bicarbonate at 1.37g/l and D-Glucose at 0.1 g/l.

Three lenses for each example were tested using Mucin solution, and three were tested using PBS as a control solution. The test lenses were blotted on sterile gauze to remove packing solution and aseptically transferred, using sterile forceps, into sterile, 24 well cell culture plates (one lens per well) each well containing 2 ml of Mucin solution. Each lens was fully immersed in the solution. Control lenses were prepared using PBS as soak solution instead of lipocalin.

The plates containing the lenses immersed in Mucin as well as plates containing control lenses immersed in PBS were sealed using parafilm to prevent evaporation and dehydration, placed onto an orbital shaker and incubated at 35°C, with agitation at 100 rpm for 72 hours. After the 72 hour incubation period the lenses were rinsed 3 to 5 times by dipping lenses into three (3) separate vials containing approximately 200 ml volume of PBS. The lenses were blotted on a paper towel to remove excess PBS solution and transferred into sterile 24 well plates each well containing 1 ml of PBS solution.

Mucin uptake was determined using on-lens bicinchoninic acid method using QP-BCA kit ( Sigma, QP-BCA) following the procedure described by the manufacturer (the standards prep is described in the kit) and is calculated by subtracting the optical density measured on PBS soaked lenses ( background) from the optical density determined on lenses soaked in Mucin solution. Optical density was measured using a SynergyII Micro-plate reader capable for reading optical density at 562nm.

Wettability is measured by measuring the dynamic contact angle or DCA, typically at 23 $\pm$3°C and a relative

humidity of about 45 ±5%, with borate buffered saline, using a Wilhelmy balance. The wetting force between the lens surface and borate buffered saline is measured using a Wilhelmy microbalance while the sample strip cut from the center portion of the lens is being immersed into or pulled out of the saline at a rate of 100 microns/sec. The following equation is used

$$F = \gamma p \cos\theta \qquad \text{or} \qquad \theta = \cos^{-1}(F/\gamma p)$$

where F is the wetting force, y is the surface tension of the probe liquid, p is the perimeter of the sample at the meniscus and θ is the contact angle. Typically, two contact angles are obtained from a dynamic wetting experiment - advancing contact angle and receding contact angle. Advancing contact angle is obtained from the portion of the wetting experiment where the sample is being immersed into the probe liquid, and these are the values reported herein. Five lenses of each composition are measured and the average is reported.

Oxygen permeability (Dk) was determined by the polarographic method generally described in ISO 18369-4:2006, but with the following variations. The measurement is conducted at an environment containing 2.1 % oxygen. This environment is created by equipping the test chamber with nitrogen and air inputs set at the appropriate ratio, for example 1800 ml/min of nitrogen and 200 ml/min of air. The t/Dk is calculated using the adjusted oxygen concentration. Borate buffered saline was used. The dark current was measured by using a pure humidified nitrogen environment instead of applying MMA lenses. The lenses were not blotted before measuring. Four lenses with uniform thickness in the measurement area were stacked instead of using lenses of varied thickness. The L/Dk of 4 samples with significantly different thickness values are measured and plotted against the thickness. The inverse of the regressed slope is the preliminary Dk of the sample. If the preliminary Dk of the sample is less than 90 barrer, then an edge correction of (1 + (5.88(CT in cm))) is applied to the preliminary L/Dk values. If the preliminary Dk of the sample is greater than 90 barrer, then an edge correction of (1 + (3.56(CT in cm))) is applied to the preliminary L/Dk values. The edge corrected L/Dk of the 4 samples are plotted against the thickness. The inverse of the regressed slope is the Dk of the sample. A curved sensor was used in place of a flat sensor. The resulting Dk value is reported in barrers.

<u>Water Content</u>

The water content was measured as follows: lenses to be tested are allowed to sit in packing solution for 24 hours. Each of three test lens are removed from packing solution using a sponge tipped swab and placed on blotting wipes which have been dampened with packing solution. Both sides of the lens are contacted with the wipe. Using tweezers, the test lens are placed in a weighing pan and weighed. The two more sets of samples are prepared and weighed as above.pan is weighed three times and the average is the wet weight.

The dry weight is measured by placing the sample pans in a vacuum oven which has been preheated to 60°C for 30 minutes. Vacuum is applied until at least 0.4 inches Hg is attained. The vacuum valve and pump are turned off and the lenses are dried for four hours. The purge valve is opened and the oven is allowed reach atmospheric pressure. The pans are removed and weighed. The water content is calculated as follows:

$$\text{Wet weight} = \text{combined wet weight of pan and lenses} - \text{weight of weighing pan}$$

$$\text{Dry weight} = \text{combined dry weight of pan and lens} - \text{weight of weighing pan}$$

$$\%\ \text{water content} = \frac{(\text{wet weight} - \text{dry weight})}{\text{wet weight}} \times 100$$

The average and standard deviation of the water content are calculated for the samples are reported.

Modulus is measured by using the crosshead of a constant rate of movement type tensile testing machine equipped with a load cell that is lowered to the initial gauge height. A suitable testing machine includes an Instron model 1122. A dog-bone shaped sample having a 0.522 inch length, 0.276 inch "ear" width and 0.213 inch "neck" width is loaded into the grips and elongated at a constant rate of strain of 2 in/min. until it breaks. The initial gauge length of the sample (Lo) and sample length at break (Lf) are measured. Twelve specimens of each composition are measured and the average is reported. Tensile modulus is measured at the initial linear portion of the stress/strain curve.

$$\text{Percent elongation is} = [(Lf - Lo)/Lo] \times 100.$$

Examples

These examples do not limit the invention. They are meant only to suggest a method of practicing the invention. Those knowledgeable in lenses as well as other specialties may find other methods of practicing the invention. The following abbreviations are used in the examples below:

| | |
|---|---|
| DMA | N,N-dimethylacrylamide |
| HEMA | 2-hydroxyethyl methacrylate |
| IRGACURE 819 | bis(2,4,6-trimethylbenzoyl)-phenylphosphineoxide |
| Norbloc | 2-(2'-hydroxy-5-methacrylyloxyethylphenyl)-2H-benzotriazole |
| OH-mPDMS | mono-(3-methacryloxy-2-hydroxypropyloxy)propyl terminated, mono-butyl terminated polydimethylsiloxane (Mw = 612 g/mole) |
| PVP | poly(N-vinyl pyrrolidone) (K values noted) |
| TEGDMA | tetraethyleneglycol dimethacrylate |
| acPDMS 1000 | bis-3-acryloxy-2-hydroxypropyloxypropyl polydimethylsiloxane (MW = 1000) |
| CGI1850 | 1:1 (wgt) blend of 1-hydroxycyclohexyl phenyl ketone and bis(2,6-dimethoxybenzoyl)-2,4-4-trimethylpentyl phosphine oxide |
| mPEG 475 | polyethyleneglycol (475 $M_W$) monomethylether monomethacrylate |

Example 1:Manufacture of Hydrogel Contact Lens

Components of the reactive monomer mixes of Table 1 were formulated in a zero diluent system. The blends were prepared in amber jars and rolled on a jar roller with periodic heating at 45°C until complete solubilization was obtained. Reactive monomer mixes were degassed under vacuum followed by nitrogen backfill at 760 mmHg for 15 minutes. The lenses were photo-cured using the mold parts and cure conditions shown in Table 2. Lenses were cured with quartz plates placed on top of base curves to improve edge cut and centration. Pallets with reactive monomer mixtures loaded mold parts were placed on mirrored surface for cure.

The mold parts were mechanically separated, and the lenses remained predominantly in the zeonor front curve. The lenses were released from the front curves by applying a mechanical force on the outer surface of the plastic parts (i.e., tapping lightly on the front curve using a hammer) at room temperature. The lenses appeared slightly stiff and brittle upon release.

Table 1

| Component | Sample 1 | Sample 2 |
|---|---|---|
| OH-mPDMS | 55.00 | 54.00 |
| DMA | 14.00 | 14.00 |
| HEMA | 10.00 | 10.00 |
| TEGDMA | 0.50 | 0.00 |
| acPDMS 1000 | 0.00 | 1.50 |
| PVP K30 | 12.00 | 12.00 |
| PVP K90 | 8.00 | 8.00 |
| CGI 1850 | 0.50 | 0.50 |

Table 2

| | |
|---|---|
| Nitrogen Cure Box | |
| Oxygen Level | <0.5 % |
| Visible Light Intensity (TL03) | 5-6 $mW/cm^2$ |
| Temperature | 55 - 60°C |
| RRM Dose | 100 $\mu L$ |
| Cure Time | 15 minutes |
| Mold Parts | |
| Front Curve | Zeonor |

(continued)

| Mold Parts | |
|---|---|
| Base Curve | Polyproplyene |

The "dry released" lenses were split into 2 sets, and leached/processed via an aqueous or organic process for comparison on PVP retention. For the aqueous process, lenses were placed in 500 mL de-ionized water at 90 - 95 °C for 20 minutes, followed by 1 change out with 500 mL de-ionized water at 90 - 95 °C for 10 minutes prior to transfer to lens vials with 2 mL packing solution and subsequent sterilization. For the organic process, lenses were placed in 400 mL of a mixture of 70:30 iPA:de-ionized water in a glass jar. The jar was rolled for 30 minutes on ajar roller, followed by a solvent change (70:30 iPA:de-ionized water) and 30 minutes period of rolling. Solvent was decanted and the lenses were equilibrated in the following sequence:

(i) 400 mL 50:50 iPA:de-ionized water, rolled for 8 minutes
(ii) 400 mL 25:75 iPA:de-ionized water, rolled for 8 minutes
(iii) 400 mL de-ionized water, rolled for 8 minutes
(iv) 400 mL de-ionized water change out
(v) Equilibrated in packing solution

Lenses were transferred to glass vials containing 2 mL packing solution and subsequently sterilized.

Example 2: Total Nitrogen Analysis

Nitrogen analysis was conducted on the processed lenses to determine the percent incorporation of PVP K30. Percent nitrogen incorporation was determined using the following method. The lenses were dried and subjected to combustion in oxygen. The resulting carbon dioxide, water, and nitrogen are measured by thermal conductivity using Carlo Erba Elemental Analyzer and compared directly with known standards. The results are calculated against the average of four bracketing standards, running four samples between brackets.

The data obtained are shown in Table 3, indicating that while a significant amount of the PVP was retained after organic processing, the amount extracted is the reservoir of PVP available for release over time.

Table 3

| Sample | % N (wt. basis) Before Processing | % N (dry wt. basis) After Processing | % Incorporation |
|---|---|---|---|
| 1 Aqueous | 4.32 | 4.25 | 98.38 |
| 2 Aqueous | 4.35 | 4.28 | 98.39 |
| 1 Organic | 4.32 | 3.69 | 85.42 |
| 2 Organic | 4.35 | 3.79 | 87.13 |

Example 3: Physical Properties

Water content, percent haze, modulus, and percent elongation were measured for sterilized lenses. The data obtained are shown in Table 4, indicating a significantly higher level of haze obtained for the organic treated lenses.

Table 4

| Sample | % Water | % Haze (relative to CSI) | DCA Advancing angle | Mechanicals | |
|---|---|---|---|---|---|
| | | | | Modulus (psi) | % Elongation |
| 1 Aqueous | 44.4 (0.3) | 16.63 (1.38) | 90(16) | NT | NT |
| 2 Aqueous | 43.8 (0.4) | 15.37 (1.83) | 83 (13) | NT | NT |
| 1 Organic | 45.0 (0.5) | 155.68 (10.32) | 73 (8) | 125.3 (4.2) | 205.3 (99.4) |
| 2 Organic | 43.5 (0.2) | 124.32 (5.83) | 79(10) | 147.8 (9.2) | 149.3 (41.5) |

Example 4: Formulations Containing mPEG 475 as Hydrophilic Component, with Various Ratios of K30 to K90

Blends containing mPEG 475 as a hydrophilic component and various combinations of K30 and K90 were formulated as shown in Table 5 as per Example 1. In addition, the percent OH-mPDMS was decreased and percent HEMA was increased compared to the samples in Table 1. Further, lenses were fabricated, demolded and subjected to the aqueous process as per Example 1.

Table 5

| Component | Sample 3 | Sample 4 | Sample 5 | Sample 6 |
|---|---|---|---|---|
| OH-mPDMS | 40.00 | 40.00 | 40.00 | 40.00 |
| mPEG 475 | 10.00 | 17.00 | 19.00 | 21.00 |
| HEMA | 25.25 | 20.25 | 20.25 | 20.25 |
| TEGDMA | 0.50 | 0.50 | 0.50 | 0.50 |
| Norbloc | 2.00 | 2.00 | 2.00 | 2.00 |
| PVP K90 | 10.00 | 10.00 | 10.00 | 10.00 |
| PVP K30 | 12.00 | 10.00 | 8.00 | 6.00 |
| IRGACURE 819 | 0.25 | 0.25 | 0.25 | 0.25 |

The resulting lenses were clear/non-phase separated after cure and appeared well plasticized with no evidence of physical damage. There was a noticeable level of difficulty in mechanical lens release (lens stuck to front curve), indicating a high level of plasticity or fluidity. The lenses were clear/non-phase separated in packing solution prior to autoclaving and were hazy/phase separated after autoclaving.

Example 5: Physical Properties

Water content, percent haze, modulus, and percent elongation were measured for sterilized lenses from sample 3. The data obtained are shown in Table 6, where a significant level of haze was observed.

Table 6

| % Water | % Haze (relative to CSI) | DCA Advancing angle | Mechanicals | |
|---|---|---|---|---|
| | | | Modulus (psi) | % Elongation |
| 47.0 (0.2) | 152 (5) | NT | 129.8 (6.3) | 322.1 (36.6) |

Example 6: Introduction of acPDMS 1000 for Formation of Non-phase Separated Autoclaved Lenses

The blends in Samples 5 and 6 (which previously produced phase separated lenses upon autoclaving) were re-formulated with acPDMS 1000 as a component of the crosslinker system, at the expense of HEMA. These blends are shown as Samples 7 and 8 in Table 7. Blends were treated as per Example 1. In addition, lenses were fabricated, de-molded and subjected to the aqueous process as per Example 1.

Table 7

| Component | Sample 7 | Sample 8 | Sample 9 |
|---|---|---|---|
| OH-mPDMS | 40.00 | 40.00 | 40.00 |
| acPDMS 1000 | 2.00 | 2.00 | 2.00 |
| mPEG 475 | 21.00 | 19.00 | 0.00 |
| DMA | 0.00 | 0.00 | 19.00 |
| HEMA | 18.25 | 18.25 | 18.25 |
| TEGDMA | 0.50 | 0.50 | 0.50 |
| Norbloc | 2.00 | 2.00 | 2.00 |
| PVP K90 | 10.00 | 10.00 | 10.00 |
| PVP K30 | 6.00 | 8.00 | 8.00 |
| IRGACURE 819 | 0.25 | 0.25 | 0.25 |

The resulting lenses were clear/non-phase separated after cure. Further, lenses from Samples 7 and 8 appeared to have a high level of plasticity while lenses from Sample 9 were very brittle. There was noticeable level of difficulty in mechanical lens release (lens stuck to FC) for Samples 7 and 8. The lenses were clear/non-phase separated in packing solution prior to autoclaving and were clear/non-phase separated after autoclaving, indicating that acPDMS 1000 has a significant effect on reducing haze or phase separation.

Example 7: Physical Properties:

Water content, percent haze, modulus, and percent elongation were measured for sterilized lenses from Samples 7-9. The data obtained are shown in Table 8, where clear/non-phase separated lenses were obtained. In addition, all lenses were very wettable and characterized by low moduli.

Table 8

| Sample | % Water | % Haze (relative to CSI) | DCA Advancing angle | Dk (Edge Corrected) | Mechanicals | |
|---|---|---|---|---|---|---|
| | | | | | Modulus (psi) | % Elongation |
| 7 | 47.7<br>(0.0) | 15(1) | [a]51 (14)<br>[b]50(11)<br>[c]48 (6)<br>[d]62 (12) | 75 | 130.2 (5.8) | 159.9 (32.7) |
| 8 | 47.9<br>(0.1) | 21(0) | [a]51 (7)<br>[b]50 (3)<br>[c]48 (3)<br>[d]51 (9) | NT | 123.4 (8.9) | 159.5 (31.2) |
| 9 | 45.5 (0.1) | NT | [a]51 (8) | 59 | 142.7 (7.2) | 226.8 (34.0) |

[a]Measured directly out of package
[b]3 hrs equilibration in DCA medium
[c]24 hrs equilibration in DCA medium
[d]48 hrs equilibration in DCA medium

Example 8: Adjustment of mPEG 475 to DMA Ratio for Optimal Lens Release

Using Sample 8 as the base formulation, DMA was added at 3%, 6% and 9% at the expense of mPEG 475, as shown in the Samples in Table 9. The intent was to tune the visco-elastic properties in the cured lenses, using low concentrations of DMA such that the mechanical lens release from the FC was acceptable, while obtaining optimal degree of polymerization. Blends were treated as per Example 1. In addition, lenses were fabricated, de-molded and subjected to the aqueous process as per Example 1.

Table 9

| Component | Sample 10 | Sample 11 | Sample 12 |
|---|---|---|---|
| OH-mPDMS | 40.00 | 40.00 | 40.00 |
| acPDMS 1000 | 2.00 | 2.00 | 2.00 |
| mPEG 475 | 16.00 | 13.00 | 10.00 |
| DMA | 3.00 | 6.00 | 9.00 |
| HEMA | 18.25 | 18.25 | 18.25 |
| TEGDMA | 0.50 | 0.50 | 0.50 |
| Norbloc | 2.00 | 2.00 | 2.00 |
| PVP K90 | 10.00 | 10.00 | 10.00 |
| PVP K30 | 8.00 | 8.00 | 8.00 |

(continued)

| Component | Sample 10 | Sample 11 | Sample 12 |
|---|---|---|---|
| IRGACURE 819 | 0.25 | 0.25 | 0.25 |

The resulting lenses were clear/non-phase separated after cure. There was a noticeable level of difficulty in mechanical lens release (lens stuck to FC) for Sample 10. Lenses for Samples 11 and 12 appeared to have acceptable level of plasticity and were mechanically released without difficulty.

Example 9: Physical Properties

Water content, percent haze, modulus, and percent elongation were measured for sterilized lenses from Samples 10 through 12. The data obtained are shown in Table 10.

Table 10

| Sample | % Water | % Haze (relative to CSI) | DCA Advancing angle | Dk | Mechanicals | |
|---|---|---|---|---|---|---|
| | | | | | Modulus (psi) | % Elongation |
| 10 | 46.4 (0.2) | 11(1) | 55 (6) | 75 | 152.2 (9.2) | 129.6 (33.9) |
| 11 | 47.7 (0.3) | 19(1) | NT | NT | 157.9 (8.6) | 149.7 (26.2) |
| 12 | 47.5 (0.2) | 20(1) | NT | 64 | 151.9 (12.6) | 164.4 (41.8) |

Example 10: Lower Modulus

Blends containing a combination of K30 and K90 and various ratios of crosslinkers (acPDMS 1000 : TEGDMA) were formulated as shown in Table 11 as per Example 1. In addition, lenses were fabricated and demolded as per Example 1. The "dry released" lenses were placed directly into individual lens vials containing 3 mL packing solution and subsequently sterilized.

Table 11

| Component | Sample 13 | Sample 14 | Sample 15 | Sample 16 | Sample 17 | Sample 18 | Sample 19 | Sample 20 |
|---|---|---|---|---|---|---|---|---|
| OH-mPDMS | 38.00 | 38.00 | 38.00 | 38.00 | 38.00 | 38.00 | 38.00 | 38.00 |
| acPDMS 1000 | 2.00 | 2.00 | 2.00 | 2.00 | 2.00 | 2.00 | 2.00 | 2.00 |
| mPEG 475 | 10.00 | 13.00 | 13.00 | 13.00 | 13.00 | 13.00 | 14.00 | 14.00 |
| DMA | 11.00 | 8.00 | 8.25 | 8.50 | 6.00 | 8.00 | 7.00 | 7.00 |
| HEMA | 18.25 | 18.25 | 18.25 | 18.25 | 18.50 | 16.75 | 16.75 | 16.75 |
| TEGDMA | 0.50 | 0.50 | 0.25 | 0.00 | 0.25 | 0.00 | 0.00 | 0.00 |
| Norbloc | 2.00 | 2.00 | 2.00 | 2.00 | 2.00 | 2.00 | 2.00 | 2.00 |
| PVP K90 | 10.00 | 10.00 | 10.00 | 10.00 | 12.00 | 12.00 | 12.00 | 10.00 |
| PVP K30 | 8.00 | 8.00 | 8.00 | 8.00 | 8.00 | 8.00 | 8.00 | 10.00 |
| IRGACURE 819 | 0.25 | 0.25 | 0.25 | 0.25 | 0.25 | 0.25 | 0.25 | 0.25 |

The resulting lenses were clear/non-phase separated after cure, appeared to have acceptable level of plasticity, and released well from FC using mechanical force.

Example 11: Physical Properties

Water content, percent haze, modulus, and percent elongation were measured for sterilized lenses from Samples 13 through 20. The data obtained are shown in Table 12, where significantly lower moduli were obtained compared to the Samples in Table 10.

Table 12

| Sample | % Water | % Haze (relative to CSI) | DCA Advancing angle | Dk | Mechanicals | |
|---|---|---|---|---|---|---|
| | | | | | Modulus (psi) | % Elongation |
| 13 | 49.5 (0.2) | 10(0) | NT | 60 | 133.9 (9.8) | 162.9 (24.7) |
| 14 | 49.5 (0.2) | 10(1) | NT | 60 | 129.5 (7.4) | 127.7 (31.6) |
| 15 | 51.5 (0.3) | 16(4) | NT | 63 | 113.0 (8.7) | 202.3 (27.5) |
| 16 | 52.3 (0.2) | 18(0) | 61(7) | 62 | 100.2 (8.7) | 204.7 (25.5) |
| 17 | 50.3 (0.2) | 9(1) | NT | 62 | 127.4 (7.4) | 186.4 (45.4) |
| 18 | 54.5 (0.0) | 25(1) | 51 (12) | 65 | 81.8 (4.9) | 261.9 (55.0) |
| 19 | 54.4 (0.2) | 22(1) | 55 (11) | 63 | 83.0 (13.0) | 243.8 (42.8) |
| 20 | 54.3 (0.1) | 20(2) | 52(6) | 65 | 87.6(5.1) | 258.7 (43.6) |

Example 12: PVP Release

Sterilized lenses from Samples 16 and 18 were tested for the release of PVP into packing solution (borate buffered saline solution). For each lot, 2 vials were opened and the lenses were transferred, using plastic tweezers, into a new vial containing 3 mL of fresh packing solution. The vial was capped and placed on a reciprocating shaker at medium speed and ambient conditions. After 1 hour, the lenses were transferred to new vial containing 3 mL of fresh packing solution and shaken for 2 hours. This procedure was repeated for the generation of samples at the time points shown in Table 13. The samples were analyzed for PVP by High Performance Liquid Chromatography with Electrospray Ionization Mass Spectrometry (HPLC/ESI MS).

Separation of PVP was achieved by reversed-phase chromatography using the following chromatographic conditions:

| | |
|---|---|
| Column: | Polymer Labs PLRP-S Polystyrene Di-vinyl benzene, 50 x 4.6mm x 5 μm, 100 A |
| Column Temperature: | 50 °C |
| Injection Volume: | 50 μL |
| Flow Rate: | 1 mL/minute |
| Mobile Phase: | Eluent A: Acetonitrile with 0.1 % Trifluoroacetic acid |
| | Eluent B: Water with 0.1% Trifluoroacetic acid |
| | Eluent C: Isopropanol with 0.1% Trifluoroacetic acid |

The mobile phase gradient for analysis was as follows:

| Time (mins) | %A | %B | %C |
|---|---|---|---|
| 0.0 | 22 | 78 | 0 |
| 1.0 | 22 | 78 | 0 |
| 11.0 | 70 | 30 | 0 |
| 11.1 | 50 | 0 | 50 |
| 14.0 | 50 | 0 | 50 |
| 14.1 | 22 | 78 | 0 |
| 17 | 22 | 78 | 0 |

Detection of PVP was achieved by ESI MS with 80% source Collision Induced Dissociation (CID), with monitoring ions with a mass to charge (m/z) of 86 (PVP). The data for cumulative release of PVP from Samples 16 and 18 are shown in Table 13, where release was demonstrated for up to 24 hours.

Table 13

| | Sample 16 | Sample 18 |
|---|---|---|
| Time (hr) | Cumulative Release ug/Lens | Cumulative Release ug/Lens |
| 1.00 | 76.02 | 18.63 |
| 2.00 | 79.11 | 21.18 |
| 4.50 | 89.29 | 32.65 |
| 6.00 | 92.93 | 36.60 |
| 8.50 | 99.10 | 45.87 |
| 12.00 | 107.84 | 57.67 |
| 24.00 | 139.17 | 100.53 |

Example 13: Optimization of mPEG 475:DMA Ratio for Desirable "Dry Release"

Blends containing a combination of K30 and K90 were formulated as shown in Table 14 as per Example 1. In addition, lenses were fabricated and "dry released" as per Example 1. The purpose of this study was to characterize the sensitivity of the cure and properties of the formulation to changes in the PEG:DMA ratio, in an attempt to optimize the properties with regards to processing.

The level of plasticity or fluidity increased with increasing levels of mPEG 475, which resulted in increasing level of difficulty with respect to mechanical release at room temperature. The highest level of difficulty was obtained with Sample 21 where about 60% of the lenses remained stuck to the zeonor front curve when the mechanical force was applied. The level of brittleness increased with increasing levels of DMA, which resulted in significant improvement in the number of lenses obtained upon applying the mechanical force to the front curve. With Sample 28, 100% of the lenses release from the front curve when the mechanical force was applied at room temperature. However, a significant number of lenses were characterized with physical defects such as cracks or factures and edge chips likely due to the high degree of brittleness. The best yields, i.e. the highest number of lenses release with minimal number of physical defects, were obtained with Samples 24, 25, and 26.

Note that all of the dry release/mechanical release studies were conducted at room temperature, and temperature has a significant impact on the visco-elastic properties of the cured lenses. Therefore, temperature may be used to influence the release behavior of lenses.

Cooling the lenses with high levels of mPEG 475 (Samples 21, 22, and 23) to below room temperature, would tend to increase the viscosity and level of brittleness in the lenses, which would likely result in significant improvements in the yields obtained upon dry release/mechanical release.

While heating the lenses with high levels of DMA (Samples 27 and 28) to above room temperature, would tend to decrease the viscosity and level of brittleness in the lenses, which would likely result in significant improvements in the physical defects and hence improve the yields obtained upon dry release/mechanical release.

Table 14

| Component | Sample 21 | Sample 22 | Sample 23 | Sample 24 | Sample 25 | Sample 26 | Sample 27 | Sample 28 |
|---|---|---|---|---|---|---|---|---|
| OH-mPDMS | 40.00 | 40.00 | 40.00 | 40.00 | 40.00 | 40.00 | 40.00 | 40.00 |
| acPDMS 1000 | 2.00 | 2.00 | 2.00 | 2.00 | 2.00 | 2.00 | 2.00 | 2.00 |
| mPEG 475 | 19.00 | 18.00 | 16.00 | 13.00 | 10.00 | 6.00 | 3.00 | 0.00 |
| DMA | 0.00 | 1.00 | 3.00 | 6.00 | 9.00 | 13.00 | 16.00 | 19.00 |
| HEMA | 18.25 | 18.25 | 18.25 | 18.25 | 18.25 | 18.25 | 18.25 | 18.25 |
| TEGDMA | 0.50 | 0.50 | 0.50 | 0.50 | 0.50 | 0.50 | 0.50 | 0.50 |
| Norbloc | 2.0 | 2.0 | 2.00 | 2.00 | 2.00 | 2.00 | 2.00 | 2.00 |
| PVP K90 | 10.00 | 10.00 | 10.0 | 10.00 | 10.00 | 10.00 | 10.00 | 10.00 |
| PVP K30 | 8.00 | 8.00 | 8.0 | 8.00 | 8.00 | 8.00 | 8.00 | 8.00 |
| IRGACURE 819 | 0.25 | 0.25 | 0.25 | 0.25 | 0.25 | 0.25 | 0.25 | 0.25 |

Example 14: Effect of Ratio of PVP K30:K90 on Lens Properties

Blends containing a combination of K30 and K90 were formulated as shown in Table 15 as per Example 1. In addition, lenses were fabricated and demolded as per Example 1. The "dry released" lenses were transferred directly into 1 mL polypropylene blister packages containing 995 μL packing solution (with 50 ppm methylcellulose) heat sealed with propylene lined aluminum foil and subsequently sterilized by autoclaving. The purpose of this study was to examine the impact of the K30:K90 ratio on the physical properties, parameters, biometrics profile and leachable monomers of the lenses.

Table 15

| Component | Sample 29 | Sample 30 | Sample 31 | Sample 32 |
|---|---|---|---|---|
| OH-mPDMS | 38.00 | 38.00 | 38.00 | 38.00 |
| acPDMS 1000 | 2.00 | 2.00 | 2.00 | 2.00 |
| mPEG 475 | 13.00 | 13.00 | 13.00 | 13.00 |
| DMA | 8.00 | 8.00 | 8.00 | 8.00 |
| HEMA | 16.73 | 16.73 | 16.73 | 16.73 |
| Blue HEMA | 0.02 | 0.02 | 0.02 | 0.02 |
| Norbloc | 2.00 | 2.00 | 2.00 | 2.00 |
| PVP K90 | 12.00 | 10.00 | 8.00 | 6.00 |
| PVP K30 | 8.00 | 10.00 | 12.00 | 14.00 |
| IRGACURE 819 | 0.25 | 0.25 | 0.25 | 0.25 |

Example 15: Lens Physical Properties

Lenses from Example 14 were tested for physical properties. As demonstrated for Samples 29 through 32 in Table 16, comparable lens properties were obtained for the ratios of K90:K30 examined. All the lenses were very clear and wettable with low moduli, and the overall properties of the lenses are suitable for good clinical performance. In addition, the refractive indices of the lenses were measured on five consecutive days, after the sterilized lenses were stored at room temperature for about 1 week. The data in Table 16 show that the refractive indices of all of the lenses remained essentially constant from day 1 through day 5, suggesting that the lenses have attained equilibrium very quickly.

Table 16

| Property | Sample 29 | Sample 30 | Sample 31 | Sample 32 |
|---|---|---|---|---|
| Water Content, % | 54.8(0.3) | 54.4(0.1) | 54.3(0.1) | 53.9(0.3) |
| Haze, % of CSI | 15(1) | 17(0) | 17(0) | 18(0) |
| Refractive Index, Day 1 | 1.4013 | 1.4026 | 1.4034 | 1.4038 |
| Refractive Index, Day 2 | 1.4016 | 1.4022 | 1.4033 | 1.4037 |
| Refractive Index, Day 3 | 1.4015 | 1.4026 | 1.4040 | 1.4045 |
| Refractive Index, Day 4 | 1.4024 | 1.4030 | 1.4033 | 1.4043 |
| Refractive Index, Day 5 | 1.4019 | 1.4033 | 1.4038 | 1.4040 |
| Sessile Drop | 74.00 (3.61) | 70.67 (7.51) | 66.33 (4.51) | 71.33 (4.16) |
| Dk (edge corr.) | 63.0 | 67.9 | 68.6 | 66.8 |
| Modulus, psi | 75.9(6.1) | 77.7 (3.2) | 89.2(5.9) | 71.1(3.8) |
| Elongation, % | 187.9(67.1) | 207.3 (66.0) | 214.5 (52.2) | 210.8 (76.7) |

The sessile drop measurements were conducted using a KRUSS DSA-100 TM instrument at room temperature and using DI water as probe solution. The lenses to be tested (3-5/sample) were rinsed in DI water to remove carry over from packing solution. Each test lens was placed on blotting lint free wipes which were dampened with packing solution. Both sides of the lens were contacted with the wipe to remove surface water without drying the lens. To ensure proper flattening, lenses were placed "bowl side down" on the convex surface on contact lens plastic moulds. The plastic mould

and the lens were placed in the sessile drop instrument holder, ensuring proper central syringe alignment and that the syringe corresponds to the assigned liquid. A 3 to 4 microliters of DI water drop was formed on the syringe tip using DSA 100-Drop Shape Analysis software ensuring the liquid drop was hanging away from the lens. The drop was released smoothly on the lens surface by moving the needle down. The needle was withdrawn away immediately after dispensing the drop. The liquid drop was allowed to equilibrate on the lens for 5 to 10 seconds and the contact angle was computed based on the contact angle measured between the drop image and the lens surface.

Example 16: Effect of Ratio of PVP K30:K90 on Lens Biometrics Profile

Protein, mucin and lipocalin uptake was measured using the procedures described herein. The data obtained are shown in Table 17, where negligible differences were obtained. In addition, the levels obtained are consistent with lenses of good clinical performance.

Table 17

| **Property** | **Sample 29** | **Sample 30** | **Sample 31** | **Sample 32** |
|---|---|---|---|---|
| Total Protein Uptake (μg/Lens) | 7.85 (0.63) | 7.71 (0.25) | 7.75 (0.32) | 7.7(0.40) |
| Mucin Uptake (μg/Lens) | 5.26(0.08) | 5.26 (0.12) | 5.23(0.02) | 5.15 (0.04) |
| Lipocalin Uptake (μg/Lens) | 3.71(0.18) | 3.49 (0.15) | 3.75 (0.31) | 3.70 (0.40) |

Example 17: Effect of Ratio of PVP K30:K90 on Leachable Levels

Four lenses from Example 14 (Samples 29-32) were tested for leachable monomers by reversed-phase HPLC-UV, using the method described below. The data for Samples 29 through 32 are shown in Table 18, where the levels of leachable monomers were below the limit of quantization.

10 blister packages were opened and lenses were transferred to lint-free blotting paper. Lenses were briefly blotted and transferred to a glass scintillation vial. 5 mL of methanol was added and the vial was sonicated at room temperature of 30 minutes. Samples were prepared in triplicate and the extracts were analyzed by HPLC-UV using the following conditions:

| | |
|---|---|
| Column: | Agilent Eclipse Plus C18, 75 x 4.6mm x 1.8μm |
| Column Temperature: | 25°C |
| Injection volume: | 10 μL |
| Flow rate: | 1 mL/minute |
| Mobile Phase: | Eluent A: Water with 0.05% o-phosphoric acid |
| | Eluent B: Acetonitrile with 0.05% o-phosphoric acid |
| | Eluent C: Isopropanol with 0.1% Trifluoroacetic acid |

The mobile phase gradient for analysis of DMA, HEMA, mPEG 475 and Norbloc was as follows:

| Time (mins) | %A | %B | %C |
|---|---|---|---|
| 0.0 | 97 | 3 | 0 |
| 4.0 | 97 | 3 | 0 |
| 20 | 0 | 100 | 0 |
| 30 | 0 | 100 | 0 |
| 31 | 97 | 3 | 0 |
| 35 | 97 | 3 | 0 |

The mobile phase gradient for analysis of OH-mPDMS was as follows:

| Time (mins) | %A | %B | %C |
|---|---|---|---|
| 0.0 | 0 | 90 | 10 |
| 5 | 0 | 90 | 10 |

(continued)

| Time (mins) | %A | %B | %C |
|---|---|---|---|
| 8 | 0 | 30 | 70 |
| 11 | 0 | 30 | 70 |
| 12 | 0 | 90 | 10 |
| 17 | 0 | 90 | 10 |

The results are depicted in Table 18.

Table 18

| Component | Sample 29 | Sample 30 | Sample 31 | Sample 32 |
|---|---|---|---|---|
| DMA | < 3 μg/g | < 3 μg/g | < 3 μg/g | < 3 μg/g |
| HEMA | < 3 μg/g | < 3 μg/g | < 3 μg/g | < 3 μg/g |
| mPEG 475 | < 78 μg/g | < 78 μg/g | < 78 μg/g | < 78 μg/g |
| Norbloc | < 3 μg/g | < 3 μg/g | < 3 μg/g | < 3 μg/g |
| OH-mPDMS (n=4) | < 78 μg/g | < 78 μg/g | < 78 μg/g | < 78 μg/g |

## Claims

**1.** A method of manufacturing a contact lens, said method comprising the steps of:

(i) dispensing to a mold a reactive mixture comprising (i) at least one silicone component, (ii) at least one low molecular weight polyamide having a weight average molecular weight of less than 200,000, (iii) at least one high molecular weight polyamide having a weight average molecular weight of greater than 200,000, and (iv) less than about 15 wt% diluent, wherein said low molecular weight polyamide does not contain a reactive group;
(ii) curing said reactive mixture within said mold to form said contact lens; and
(iii) removing said contact lens from said mold, without liquid.
(iv) extracting the contact lens using aqueous solution;

wherein polyamides are selected from polylactams, polyacrylamides and copolymers thereof.

**2.** The method of claim 1, wherein said at least one low molecular weight polyamide has a weight average molecular weight of less than 100,000

**3.** The method of claim 1, wherein said at least one high molecular weight polyamide has a weight average molecular weight of greater than 400,000

**4.** The method of claim 2, wherein said low molecular weight polyamide is a polyvinylpyrrolidone.

**5.** The method of claim 3, wherein said high molecular weight polyamide is a polyvinylpyrrolidone.

**6.** The process of claim 4, wherein said high molecular weight polyamide is a polyvinylpyrrolidone.

**7.** The method of claim 6, wherein said low molecular weight polyamide is selected from the group consisting of PVP K30, PVP K15, PVP K12 and mixtures thereof.

**8.** The method of claim 6 or 7, wherein said high molecular weight polyamide is selected from the group consisting of PVP K60, PVP K80, PVP K85, PVP K90, and PVP K120.

**9.** The process of claim 1, wherein said reactive components comprise less than 5%, by weight, of one or more diluents.

**10.** The method of claim 1, wherein the ratio of said at least one low molecular weight polyamide and said at least one

high molecular weight polyamide is from about 1:5 to about 5:1.

**11.** The method of claim 1, wherein said lens comprises at least 1%, by weight, of said low molecular weight polyamide.

**12.** The method of claim 1, wherein said lens comprises from at least 3%, by weight, of said high molecular weight polyamide.

**13.** The method of claim 1, wherein said high molecular weight polyamide does not contain a reactive group.

**14.** The method of claim 1, wherein said reactive components further comprise at least one polyethyleneglycol.

**15.** The method of claim 15, wherein said at least one polyethylene glycol is mPEG475.

**16.** The process of claim 1, wherein said silicone component is selected from compounds of Formula I:

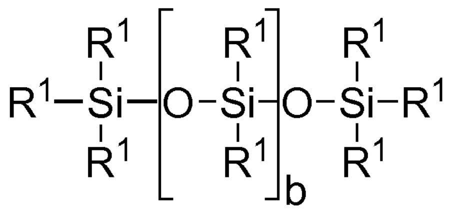

Formula I

wherein:

$R^1$ is independently selected from reactive groups, monovalent alkyl groups, or monovalent aryl groups, any of the foregoing which may further comprise functionality selected from hydroxy, amino, oxa, carboxy, alkyl carboxy, alkoxy, amido, carbamate, carbonate, halogen or combinations thereof; and monovalent siloxane chains comprising 1-100 Si-O repeat units which may further comprise functionality selected from alkyl, hydroxy, amino, oxa, carboxy, alkyl carboxy, alkoxy, amido, carbamate, halogen or combinations thereof;
where b = 0 to 500, where it is understood that when b is other than 0, b is a distribution having a mode equal to a stated value; and
wherein at least one $R^1$ comprises a reactive group.

**17.** The process of claim 1 wherein said at least one silicone component is selected from the group consisting of monomethacryloxypropyl terminated, mono-n-alkyl terminated polydialkylsiloxane; bis-3-acryloxy-2-hydroxypropyloxypropyl polydialkylsiloxane; methacryloxypropyl-terminated polydialkylsiloxane; mono-(3-methacryloxy-2-hydroxypropyloxy)propyl terminated, mono-alkyl terminated polydialkylsiloxane; and mixtures thereof.

**18.** The process of claim 1 wherein said at least one silicone component is selected from monomethacrylate terminated polydimethylsiloxanes; bis-3-acryloxy-2-hydroxypropyloxypropyl polydialkylsiloxane; and mono-(3-methacryloxy-2-hydroxypropyloxy)propyl terminated, mono-butyl terminated polydialkylsiloxane; and mixtures thereof.

**19.** The process of claim 1, wherein said at least one silicone component comprises mono-(3-methacryloxy-2-hydroxypropyloxy) propyl terminated, mono-butyl terminated polydialkylsiloxane.

**20.** The method of claim 1 wherein said lens is deblocked from the mold dry.

## Patentansprüche

**1.** Verfahren zum Herstellen einer Kontaktlinse, wobei das Verfahren die Schritte umfasst:

(i) Anordnen eines reaktionsfähigen Gemischs umfassend (i) wenigstens eine Siliconkomponente, (ii) wenigstens ein Polyamid mit niedrigem Molekulargewicht mit einem gewichtsgemittelten Molekulargewicht von weniger

als 200.000, (iii) wenigstens ein Polyamid mit hohem Molekulargewicht mit einem gewichtsgemittelten Molekulargewicht von höher als 200.000 und (iv) weniger als 15 Gew.-% Verdünnungsmittel in ein Formwerkzeug, wobei das Polyamid mit niedrigem Molekulargewicht keine reaktionsfähige Gruppe enthält;
(ii) Härten des reaktionsfähigen Gemischs in dem Formwerkzeug, um die Kontaktlinse zu bilden; und
(iii) Entnehmen der Kontaktlinse aus dem Formwerkzeug ohne Flüssigkeit;
(iv) Extrahieren der Kontaktlinse mit wässriger Lösung;

wobei die Polyamide ausgewählt sind aus Polylactamen, Polyacrylamiden und Copolymeren davon.

**2.** Verfahren gemäß Anspruch 1, wobei das wenigstens eine Polyamid mit niedrigem Molekulargewicht ein gewichtsgemitteltes Molekulargewicht von weniger als 100.000 aufweist.

**3.** Verfahren gemäß Anspruch 1, wobei das wenigstens eine Polyamid mit hohem Molekulargewicht ein gewichtsgemitteltes Molekulargewicht von höher als 400.000 aufweist.

**4.** Verfahren gemäß Anspruch 2, wobei das Polyamid mit niedrigem Molekulargewicht ein Polyvinylpyrrolidon ist.

**5.** Verfahren gemäß Anspruch 3, wobei das Polyamid mit hohem Molekulargewicht ein Polyvinylpyrrolidon ist.

**6.** Verfahren gemäß Anspruch 4, wobei das Polyamid mit hohem Molekulargewicht ein Polyvinylpyrrolidon ist.

**7.** Verfahren gemäß Anspruch 6, wobei das Polyamid mit niedrigem Molekulargewicht ausgewählt ist aus der Gruppe bestehend aus PVP K30, PVP K15, PVP K12 und Gemischen davon.

**8.** Verfahren gemäß Anspruch 6 oder 7, wobei das Polyamid mit hohem Molekulargewicht ausgewählt ist aus der Gruppe bestehend aus PVP K60, PVP K80, PVP K85, PVP K90 und PVP K120.

**9.** Verfahren gemäß Anspruch 1, wobei die reaktionsfähigen Komponenten weniger als 5 Gew.-% an einem oder mehreren Verdünnungsmitteln umfassen.

**10.** Verfahren gemäß Anspruch 1, wobei das Verhältnis des wenigstens einen Polyamids mit niedrigem Molekulargewicht zu dem wenigstens einen Polyamid mit hohem Molekulargewicht von etwa 1:5 bis etwa 5:1 beträgt.

**11.** Verfahren gemäß Anspruch 1, wobei die Linse wenigstens 1 Gew.-% an dem Polyamid mit niedrigem Molekulargewicht umfasst.

**12.** Verfahren gemäß Anspruch 1, wobei die Linse wenigstens 3 Gew.-% an dem Polyamid mit hohem Molekulargewicht umfasst.

**13.** Verfahren gemäß Anspruch 1, wobei das Polyamid mit hohem Molekulargewicht keine reaktionsfähige Gruppe enthält.

**14.** Verfahren gemäß Anspruch 1, wobei die reaktionsfähigen Komponenten ferner wenigstens ein Polyethylenglycol umfassen.

**15.** Verfahren gemäß Anspruch 15, wobei das wenigstens eine Polyethylenglycol mPEG475 ist.

**16.** Verfahren gemäß Anspruch 1, wobei die Siliconkomponente ausgewählt ist aus Verbindungen der Formel I:

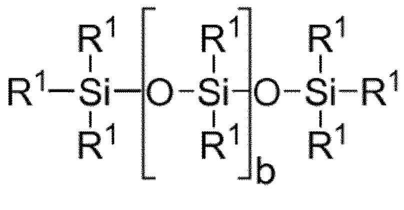

Formel I

wobei:

$R^1$ unabhängig ausgewählt ist aus reaktionsfähigen Gruppen, einwertigen Alkylgruppen und einwertigen Arylgruppen, wobei jede der Genannten ferner Funktionalität ausgewählt aus Hydroxy, Amino, Oxa, Carboxy, Alkylcarboxy, Alkoxy, Amido, Carbamat, Carbonat, Halogen oder Kombinationen davon umfassen kann; und einwertigen Siloxanketten, die 1-100 Si-O-Wiederholungseinheiten umfassen und die ferner Funktionalität ausgewählt aus Alkyl, Hydroxy, Amino, Oxa, Carboxy, Alkylcarboxy, Alkoxy, Amido, Carbamat, Halogen oder Kombinationen davon umfassen können;
wobei b = 0 bis 500, wobei zu beachten ist, dass, wenn b von 0 verschieden ist, b eine Verteilung mit einem Modus gleich einem angegebenen Wert ist; und
wobei wenigstens ein $R^1$ eine reaktionsfähige Gruppe umfasst.

**17.** Verfahren gemäß Anspruch 1, wobei die wenigstens eine Siliconkomponente ausgewählt ist aus der Gruppe bestehend aus Monomethacryloxypropyl-terminiertem, Mono-n-alkyl-terminiertem Polydialkylsiloxan; Bis-3-acryloxy-2-hydroxypropyloxypropylpolydialkylsiloxan; Methacryloxypropyl-terminiertem Polydialkylsiloxan; Mono-(3-methacryloxy-2-hydroxypropyloxy)propyl-terminiertem, Monoalkylterminiertem Polydialkylsiloxan; und Gemischen davon.

**18.** Verfahren gemäß Anspruch 1, wobei die wenigstens eine Siliconkomponente ausgewählt ist aus Monomethacrylat-terminierten Polydimethylsiloxanen; Bis-3-acryloxy-2-hydroxypropyloxypropylpolydialkylsiloxan; und Mono-(3-methacryloxy-2-hydroxypropyloxy)propyl-terminiertem, Monobutyl-terminiertem Polydialkylsiloxan; und Gemischen davon.

**19.** Verfahren gemäß Anspruch 1, wobei die wenigstens eine Siliconkomponente Mono-(3-methacryloxy-2-hydroxypropyloxy)propyl-terminiertes, Monobutylterminiertes Polydialkylsiloxan umfasst.

**20.** Verfahren gemäß Anspruch 1, wobei die Linse aus dem Formwerkzeug trocken entsperrt wird.

## Revendications

**1.** Procédé de fabrication d'une lentille de contact, ledit procédé comprenant les étapes consistant à :

(i) introduire dans un moule un mélange réactionnel comprenant (i) au moins un composant silicone, (ii) au moins un polyamide de faible masse moléculaire, ayant une masse moléculaire moyenne en poids inférieure à 200 000, (iii) au moins un polyamide de masse moléculaire élevée, ayant une masse moléculaire moyenne en poids supérieure à 200 000, et (iv) moins d'environ 15 % en poids de diluant, ledit polyamide de fable masse moléculaire ne contenant pas de groupe réactif ;
(ii) faire durcir ledit mélange réactionnel à l'intérieur dudit moule pour former ladite lentille de contact ; et
(iii) retirer ladite lentille de contact dudit moule, sans liquide ;
(iv) extraire la lentille de contact en utilisant une solution aqueuse;

les polyamides étant choisis parmi des polylactames, des polyacrylamides et leurs copolymères.

**2.** Procédé selon la revendication 1, dans lequel ledit au moins un polyamide de faible masse moléculaire a une masse moléculaire moyenne en poids inférieure à 100 000.

**3.** Procédé selon la revendication 1, dans lequel ledit au moins un polyamide de masse moléculaire élevée a une masse moléculaire moyenne en poids supérieure à 400 000.

**4.** Procédé selon la revendication 2, dans lequel ledit polyamide de faible masse moléculaire est une polyvinylpyrrolidone.

**5.** Procédé selon la revendication 3, dans lequel ledit polyamide de masse moléculaire élevée est une polyvinylpyrrolidone.

**6.** Procédé selon la revendication 4, dans lequel ledit polyamide de masse moléculaire élevée est une polyvinylpyrrolidone.

7. Procédé selon la revendication 6, dans lequel ledit polyamide de faible masse moléculaire est choisi dans le groupe constitué par PVP K30, PVP K15, PVP K12 et leurs mélanges.

8. Procédé selon la revendication 6 ou 7, dans lequel ledit polyamide de masse moléculaire élevé est choisi dans le groupe constitué par PVP K60, PVP K80, PVP K85, PVP K90 et PVP K120.

9. Procédé selon la revendication 1, dans lequel lesdits composants réactifs comprennent moins de 5 % en poids d'un ou de plusieurs diluants.

10. Procédé selon la revendication 1, dans lequel le rapport dudit au moins un polyamide de faible masse moléculaire et dudit au moins un polyamide de masse moléculaire élevée vaut d'environ 1:5 à environ 5:1.

11. Procédé selon la revendication 1, dans lequel ladite lentille comprend au moins 1 % en poids dudit polyamide de faible masse moléculaire.

12. Procédé selon la revendication 1, dans lequel ladite lentille comprend d'au moins 3 % en poids dudit polyamide de masse moléculaire élevée.

13. Procédé selon la revendication 1, dans lequel ledit polyamide de masse moléculaire élevée ne contient pas de groupe réactif.

14. Procédé selon la revendication 1, dans lequel lesdits composants réactifs comprennent en outre au moins un polyéthylèneglycol.

15. Procédé selon la revendication 15, dans lequel ledit au moins un polyéthylèneglycol est mPEG475.

16. Procédé selon la revendication 1, dans lequel ledit composant silicone est choisi parmi des composés de formule I :

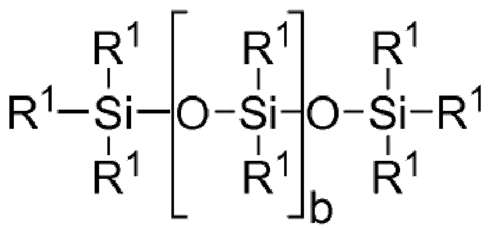

Formule I

dans laquelle:

$R^1$ est choisi indépendamment parmi des groupes réactifs, des groupes alkyle monovalents ou des groupes aryle monovalents, l'un quelconque des groupes précédents qui peut en outre comprendre une fonctionnalité choisie parmi hydroxy, amino, oxa, carboxy, alkylcarboxy, alcoxy, amido, carbamate, carbonate, halogéno ou des associations de telles fonctionnalités ; et des chaînes siloxane monovalentes comprenant 1-100 motifs répétitifs Si-O qui peuvent en outre comprendre une fonctionnalité choisie parmi alkyle, hydroxy, amino, oxa, carboxy, alkylcarboxy, alcoxy, amido, carbamate, halogéno ou des associations de telles fonctionnalités ;
b valant de 0 à 500, étant entendu que lorsque b est différent de 0, b est une distribution ayant un mode égal à une valeur établie ; et
au moins un radical $R^1$ comprend un groupe réactif.

17. Procédé selon la revendication 1, dans lequel ledit au moins un composant silicone est choisi dans le groupe constitué par un polydialkylsiloxane à terminaison monométhacryloxypropyle, à terminaison mono-n-alkyle ; un bis-3-acryloxy-2-hydroxypropyloxy-propyl-polydialkylsiloxane ; un polydialkylsiloxane à terminaison méthacryloxypropyle ; un polydialkylsiloxane à terminaison mono-(3-méthacryloxy-2-hydroxy-propyloxy)propyle, à terminaison mono-alkyle ; et des mélanges de ceux-ci.

18. Procédé selon la revendication 1, dans lequel ledit au moins un composant silicone est choisi parmi des polydiméthylsiloxanes à terminaison mono-méthacrylate ; un bis-3-acryloxy-2-hydroxypropyloxy-propyl-polydialkylsiloxane ;

et un polydialkylsiloxane à terminaison mono-(3-méthacryloxy-2-hydroxy-propyloxy)propyle, à terminaison mono-butyle ; et des mélanges de ceux-ci.

**19.** Procédé selon la revendication 1, dans lequel ledit au moins un composant silicone comprend un polydialkylsiloxane à terminaison mono-(3-méthacryloxy-2-hydroxypropyloxy)propyle, à terminaison mono-butyle.

**20.** Procédé selon la revendication 1, dans lequel ladite lentille est débloquée du moule à sec.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61663720 A
- US 2009182067 A1
- US 3808178 A
- US 4120570 A
- US 4136250 A
- US 4153641 A
- US 4740533 A
- US 5034461 A
- US 5962548 A
- US 5998498 A
- US 5070215 A
- EP 080539 A
- US 20040192872 A
- US 4259467 A
- US 6867245 B
- WO 9631792 A
- US 5314960 A
- US 5331067 A
- US 5244981 A
- US 5371147 A
- US 6367929 B
- US 5321108 A
- US 5387662 A
- US 5539016 A
- US 20020016383 A
- US 4910277 A
- US 2003162862 A
- US 2003125498 A
- US 20100280146 A
- US 6020445 A
- US 3408429 A
- US 3660545 A
- US 4113224 A
- US 4197266 A


### Non-patent literature cited in the description


- **Y. KIRSH.** Water Soluble Poly-N-Vinylamides. John Wiley & Sons, 1998, 76
- Photoinitiators for Free Radical Cationic & Anionic Photopolymerization. John Wiley and Sons, 1998, vol. III